# EUROPEAN PATENT APPLICATION

(11) **EP 3 467 318 A1**
(43) Date of publication of application: **10.04.2019**
(21) Application number: 18198055.8
(22) Date of filing: 01.10.2018
(51) Int. Cl.: F04D 25/06, F04D 29/58, A47L 5/22, A47L 9/28, H02K 9/14, H02K 9/06, H02K 11/33

(54) **BLOWING DEVICE AND VACUUM CLEANER**

(30) Priority: 04.10.2017 JP 2017194507
(71) Applicant: Nidec Corporation, Kyoto-shi, Kyoto 601-8205 (JP)
(72) Inventor: FUJIWARA, Akikazu, Kyoto, 601-8205 (JP); SAWADA, Tomoyoshi, Kyoto, 601-8205 (JP); ENOMOTO, Yoichi, Kyoto, 601-8205 (JP); MASUI, Yuki, Kyoto, 601-8205 (JP)
(74) Representative: Stöckeler, Ferdinand

(57) **Abstract**

A blowing device (1) includes an impeller (50) fixed to a shaft (111) disposed along a central axis (C) extending in an up-down direction, the impeller being rotatable about the central axis, a motor (10) rotating the impeller, a motor housing (20) disposed outside the motor in a radial direction, a blower case (60) disposed outside the motor housing in the radial direction, and a circuit board (80, 80A, 80C) disposed below a lower end of the motor housing. A flow passage (61) in communication with the impeller is provided between a radially outer surface (20a) of the motor housing and a radially inner surface (60a) of the blower case. The circuit board includes a circuit board through hole (82, 82A, 82C) that penetrates through the circuit board in the axial direction inside the radially outer surface of the motor housing in the radial direction.

## Description

### Field of the Invention

The present disclosure relates to a blowing device and a vacuum cleaner.

### Description of the Related Art

Japanese Unexamined Patent Application Publication No. 2005-2988 discloses an electric blower that is capable of efficiently cooling a power device, such as a switching element, without increasing loss in an air passage. The electric blower includes a motor, a centrifugal fan attached to a rotating shaft of the motor, a case that accommodates the motor and the centrifugal fan. The power device in the drive circuit that drives the motor is disposed on an outer surface of a partition wall that forms a flow passage between a discharge opening of the centrifugal fan and the motor.

### SUMMARY OF THE INVENTION

In Japanese Unexamined Patent Application Publication No. 2005-2988, the case includes a motor case that accommodates the motor, a fan cover that covers the centrifugal fan and that has an outer periphery that is larger than an outer periphery of the motor case, and a connection portion that connects the motor case and the fan cover to each other. The power device is disposed on the connection portion. Accordingly, in the electric blower in Japanese Unexamined Patent Application Publication No. 2005-2988, since the drive circuit including the power device is disposed outside the outer peripheral surface of the motor case in a radial direction, size of the electric blower in the radial direction may become large.

A blowing device according to an embodiment exemplifying the present disclosure includes an impeller fixed to a shaft disposed along a central axis extending in an up-down direction, the impeller being rotatable about the central axis, a motor that rotates the impeller, a motor housing disposed outside the motor in a radial direction, a blower case disposed outside the motor housing in the radial direction, and a circuit board disposed below a lower end of the motor housing. A flow passage in communication with the impeller is provided between a radially outer surface of the motor housing and a radially inner surface of the blower case. The circuit board includes a circuit board through hole that penetrates through the circuit board in the axial direction at a portion inside the radially outer surface of the motor housing in the radial direction.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a blowing device according to an embodiment exemplifying the present disclosure;
Fig. 2 is a perspective view of the blowing device illustrated in Fig. 1 from which a blower case and an impeller cover have been removed;
Fig. 3 is a longitudinal section of the blowing device according to the embodiment exemplifying the present disclosure;
Fig. 4 is a schematic diagram of an upper surface of a circuit board included in the blowing device according to the embodiment exemplifying the present disclosure;
Fig. 5 is a bottom view of the blowing device according to the embodiment exemplifying the present disclosure;
Fig. 6 is a diagram illustrating a flow of the air in the blowing device according to the embodiment exemplifying the present disclosure;
Fig. 7 is a diagram illustrating a circuit board through hole of a first modification;
Fig. 8 is a diagram illustrating a motor housing of a second modification;
Fig. 9 is a diagram illustrating a circuit board of a third modification; and
Fig. 10 is a perspective view of a vacuum cleaner according to the embodiment exemplifying the present disclosure.

### DETAILED DESCRIPTION OF THE PREFERRED EMBODIMENTS

Hereinafter, exemplary embodiments of the present disclosure will be described in detail with reference to the drawings. In describing a blowing device 1 in the present specification, a direction parallel to a central axis C of a motor 10 included in the blowing device 1 is referred to as an "axial direction", a direction orthogonal to the central axis C of the motor 10 is referred to as a "radial direction", and a direction extending along an arc about the central axis C of the motor 10 is referred to as a "circumferential direction". Furthermore, in the present specification, a description of the shapes and positional relationships of the components will be given while the axial direction is the up-down direction, and a side on which an impeller 50 is situated with respect to the motor 10 is the upper side. The up-down direction is a term used for description only and does not limit the actual positional relationships and the actual directions.

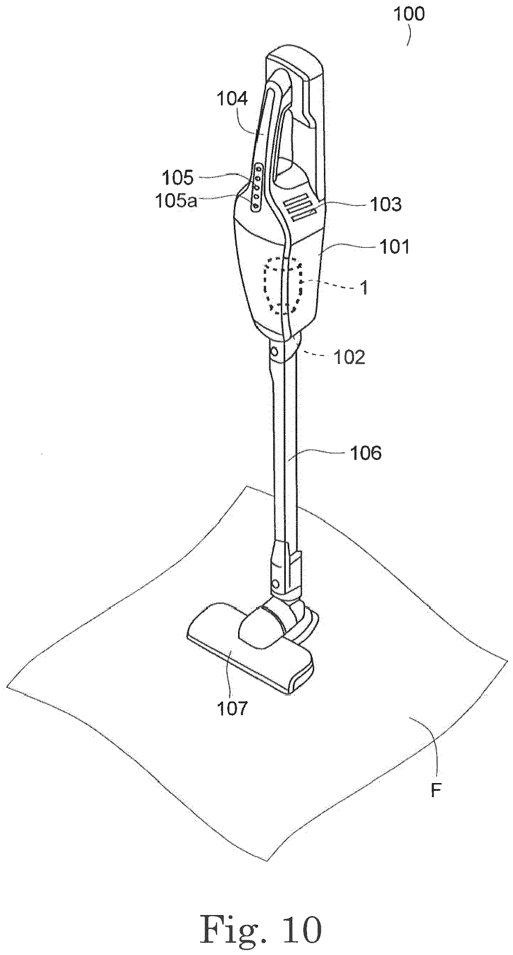

Furthermore, when describing a vacuum cleaner 100 in the present specification, the shapes and positional relationships will be described while a direction approaching a floor surface F (a surface to be cleaned) in Fig. 10 is referred to as "downwards" and a direction distancing away from the floor surface F is referred to as "upwards". Note that the directions are terms that are used merely for description and do not limit the actual positional relationships and the actual directions.

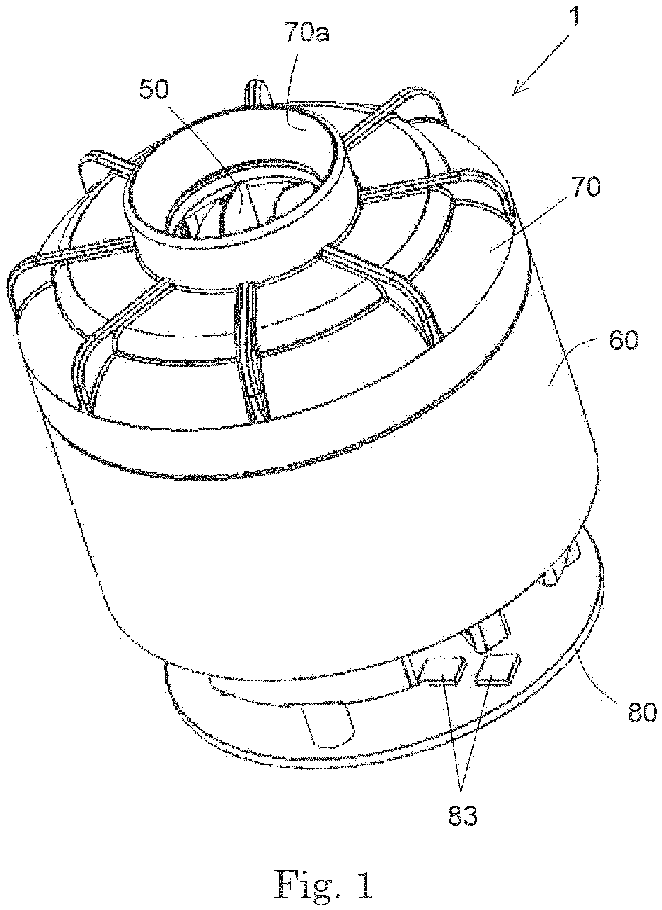

Furthermore, an "upstream side" and a "downstream side" in the present specification are the upstream side and the downstream side, respectively, in a flowing direction of a fluid drawn in through a cover inlet port 70a when the impeller 50 of the blowing device 1 illustrated in Fig. 1 is rotated.

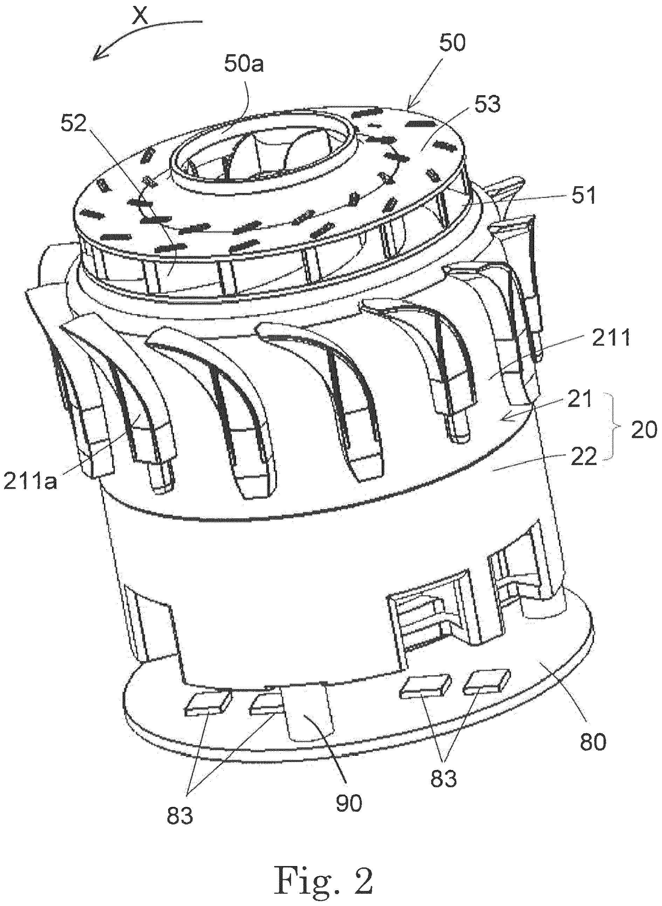

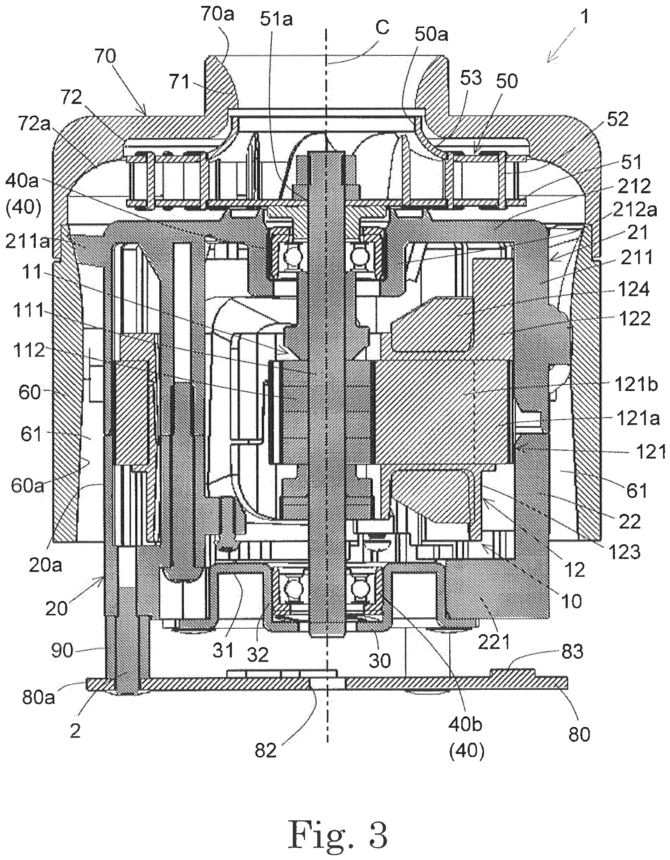

Fig. 1 is a perspective view of the blowing device 1 according to an embodiment exemplifying the present disclosure. Fig. 2 is a perspective view of the blowing device 1 illustrated in Fig. 1 from which a blower case 60 and an impeller cover 70 have been removed. Fig. 3 is a longitudinal section of the blowing device 1 according to the embodiment exemplifying the present disclosure. As illustrated in Figs. 1 to 3, the blowing device 1 includes the motor 10, a motor housing 20, the impeller 50, the blower case 60, and a circuit board 80. The blowing device 1 further includes a motor lower cover 30, a bearing 40, and the impeller cover 70.

The motor 10 rotates the impeller 50. As illustrated in Fig. 3, the motor 10 includes a rotor 11 and a stator 12. The rotor 11 includes a shaft 111 and a magnet 112. The shaft 111 is disposed along the central axis C that extends in the up-down direction. The shaft 111 is a columnar member formed of metal, for example. The magnet 112 has a cylindrical shape that extends in the axial direction, and is fixed to the shaft 111. An outer surface of the magnet 112 in the radial direction is alternately magnetized to an N-pole and an S-pole in the circumferential direction.

The stator 12 is disposed outside of the rotor 11 in the radial direction. In detail, the stator 12 includes a stator core 121, upper insulators 122, lower insulators 123, and coils 124. The stator core 121 includes an annular core back portion 121a and a plurality of tooth portions 121b that extends inwardly in the radial direction from the core back portion 121a. The core back portion 121a is annular about the central axis C. The plurality of tooth portions 121b are disposed equidistantly in the circumferential direction. The stator core 121 may be formed by adhering a plurality of core pieces. The stator core 121 may be formed by stacking a plurality of magnetic steel sheets and by machining.

The upper insulators 122 are each an insulation member that partially covers an upper surface and a lateral surface of the stator core 121. The lower insulators 123 are each an insulation member that partially covers an undersurface and a lateral surface of the stator core 121. The upper insulators 122 and the lower insulators 123 hold the tooth portions 121b therebetween in the axial direction. The upper insulators 122 and the lower insulators 123 cover the plurality of tooth portions 121b. The coils 124 are each formed by winding a length of conducting wire around the corresponding upper insulator 122 and the corresponding lower insulator 123 at the corresponding tooth portion 121b. In other words, the insulators 122 and 123 are interposed between the tooth portions 121b and the coils 124. With the above, the tooth portions 121b and the coils 124 are electrically insulated from each other.

In the motor 10, when electric power is fed to the coils 124, magnetic fluxes are generated in the tooth portions 121b. Furthermore, owing to the magnetic fluxes acting between the tooth portions 121b and the magnet 112, a torque is generated in the circumferential direction. With the above, the rotor 11 including the shaft 111 rotates about the central axis C.

The motor housing 20 is disposed outside of the motor 10 in the radial direction. The motor housing 20 accommodates the stator 12. In the present embodiment, the motor housing 20 includes an upper housing 21 and a lower housing 22. In other words, the motor housing 20 is constituted by two members. However, the motor housing 20 may be constituted by a single member or may be constituted by three or more members.

The upper housing 21 is a tubular member in which the upper side is closed. The upper housing 21 includes a tubular portion 211 and an upper cover portion 212. The tubular portion 211 has a cylindrical shape and extends in the axial direction. The cover portion 212 has a disc shape that extends in a direction orthogonal to the axial direction.

As illustrated in Fig. 2, a plurality of stator blades 211a are provided on an outer peripheral surface of the tubular portion 211. In other words, the motor housing 20 includes a plurality of stator blades 211a on a radially outer surface 20a (see Fig. 3) thereof. The plurality of stator blades 211a are disposed equidistantly in the circumferential direction. The stator blades 211a protrude from the radially outer surface 20a of the motor housing 20 towards the outside in the radial direction. The stator blades 211a each have a columnar shape extending vertically.

In detail, upper ends of the stator blades 211a extend to an upper end of the tubular portion 211. Lower ends of the stator blades 211a are positioned above a lower end of the tubular portion 211. An upper portion of each stator blade 211a has a tapered shape curved in the circumferential direction. An upper portion of each stator blade 211a has a curved surface that is inclined in a direction countering a rotation direction X of the impeller 50. Each curved surface is a curved surface that protrudes from the upstream side towards the downstream side in the rotation direction X. As illustrated in Fig. 3, the upper cover portion 212 includes, at a center portion thereof, a tubular upper bearing holding portion 212a that is depressed downwards.

The lower housing 22 has a cylindrical shape extending in the axial direction. In detail, the lower housing 22 includes, at a lower end portion, an annular flange portion 221 that extends inwardly in the radial direction. An outside diameter of the lower housing 22 is the same as an outside diameter of the tubular portion 211. The lower housing 22 is fixed to the upper housing 21. In the present embodiment, the lower housing 22 is fixed to the upper housing 21 with a fixing member, such as a screw. However, the lower housing 22 may be fixed to the upper housing 21 with an adhesive agent or by press-fitting, for example.

The motor lower cover 30 is attached to a lower end portion of the motor housing 20. In the present embodiment, the motor lower cover 30 is attached to the lower housing 22 and covers an opening on the lower side of the tubular lower housing 22. In detail, the motor lower cover 30 is attached to the flange portion 221. The motor lower cover 30 is fixed to the flange portion 221 with a screw. However, other than the fixing method that fixes with a screw, the motor lower cover 30 may be fixed to the lower housing 22 with a fixing method that fixes by adhesion, for example.

The motor lower cover 30 has a round shape in plan view viewed in the axial direction, and is formed by processing a metal plate-shaped member. The motor lower cover 30 includes an annular lower cover depression 31 that is depressed towards the upper side. The lower cover depression 31 is annular about the central axis C. The motor lower cover 30 includes a tubular lower bearing holding portion 32 at a center portion thereof, which is surrounded by the lower cover depression 31.

In detail, the bearing 40 includes an upper bearing 40a disposed above the magnet 112, and a lower bearing 40b disposed below the magnet 112. The upper bearing 40a is held by the upper bearing holding portion 212a provided in the motor housing 20. The lower bearing 40b is held by the lower bearing holding portion 32 provided in the motor lower cover 30.

In the present exemplary embodiment, the bearings 40a and 40b are ball bearings. Outer rings of the bearings 40a and 40b are fixed to inner circumferential surfaces of the holding portions 212a and 32, respectively. Inner rings of the bearings 40a and 40b are fixed to an outer peripheral surface of the shaft 111. With the above, the rotor 11 is supported in a rotatable manner with respect to the stator 12.

The impeller 50 is fixed to the shaft 111 disposed along the central axis C extending in the up-down direction. The impeller 50 is rotatable about the central axis C. In detail, the impeller 50 includes a base portion 51, a plurality of blades 52, and a shroud 53.

The base portion 51 has a disc shape. The base portion 51 includes, at the center portion thereof, a base portion through hole 51a. The blades 52 are tabular members that, on the upper side of the base portion 51, extends from an inner side towards an outer side in the radial direction and are curved in the circumferential direction. The blades 52 are disposed so as to stand erect along the axial direction. The plurality of blades 52 are arranged in the circumferential direction with gaps in between. The shroud 53 has a cylindrical shape tapered towards the upper side in the axial direction. The shroud 53 covers the plurality of blades 52 from above. An opening at the center of the shroud 53 becomes an impeller inlet port 50a of the impeller 50. The base portion 51 and the shroud 53 are connected by the plurality of blades 52.

The impeller 50 is fixed to an upper end portion of the shaft 111 passed through the base portion through hole 51a. The fixing of the impeller 50 to the shaft 111 may be done by using a fastener such as a nut or by press-fitting, for example. The impeller 50 being fixed to the shaft 111 rotates together with the shaft 111. In other words, the impeller 50 rotates about the central axis C with the drive of the motor 10.

The blower case 60 is disposed outside of the motor housing 20 in the radial direction. The blower case 60 has a tubular shape extending in the axial direction. In detail, the blower case 60 has a cylindrical shape. A portion of an inner surface 60a of the blower case 60 comes in contact with lateral surfaces of the stator blades 211a in the radial direction. The blower case 60 is fixed to the motor housing 20. A fixing method in which fixing is performed by press-fitting, with an adhesive agent, or with a screw, for example, may be used.

Flow passage 61 in communication with the impeller 50 are provided between the radially outer surface 20a of the motor housing 20 and a radially inner surface 60a of the blower case 60. In detail, in the portion where the plurality of stator blades 211a of the blower case 60 are provided, spaces that are formed between two adjacent stator blades 211a in the circumferential direction and that extend in the axial direction form the flow passages 61. As for the lower portion where the plurality of stator blades 211a are not provided, an annular space formed between the radially outer surface 20a of the motor housing 20 and the radially inner surface 60a of the blower case 60 form the flow passage 61.

The impeller cover 70 disposed above the impeller 50 covers the impeller 50. The impeller cover 70 includes the cover inlet port 70a on the upper side. The cover inlet port 70a has a cylindrical shape tapered towards the upper side in the axial direction. The impeller cover 70 is fixed to the blower case 60. In the present embodiment, the impeller cover 70 is press-fitted into an upper end portion of the blower case 60 and is fixed to the blower case 60. However, the impeller cover 70 may be fixed to the blower case 60 with another fixing method such as a fixing method that fixes by adhesion.

The impeller cover 70 includes an intake guide portion 71 and a cover main body portion 72. The intake guide portion 71 is positioned on the upper side of the impeller cover 70. The intake guide portion 71 bending inwards from an upper end extends downwards. With the above, the diameter of the cover inlet port 70a becomes smaller in a smooth manner as the cover inlet port 70a extends downwards from the upper portion. The cover main body portion 72 has a cross-sectional shape that follows the shape of the shroud 53. The cover main body portion 72 includes an exhaust guide portion 72a that is situated outside a radially outer end of the impeller 50 in the radial direction. The exhaust guide portion 72a is in communication with a space inside the blower case 60.

The circuit board 80 is disposed below the lower end of the motor housing 20. By disposing the circuit board 80 in the above manner, a size increase of the blowing device 1 owing to the circuit board 80 can be prevented. In the present embodiment, an upper surface of the circuit board 80 opposes an undersurface of the motor housing 20 in the axial direction. The circuit board 80 is formed of resin such as, for example, epoxy resin. Electronic components are disposed on the circuit board 80. The electronic components include an inverter and an IC for control, for example. The circuit board 80 is electrically connected to the stator 12 with a connecting terminal (not shown). Electric power is supplied to the stator 12 from a power supply provided external to the blowing device 1 through the circuit board 80. The external power supply may be, for example, a commercial power supply or a battery.

Note that in the present embodiment, a lower end of the shaft 111 is disposed above the circuit board 80. With such a configuration, the shaft 111 does not have to be passed through the circuit board 80, and the design freedom regarding the disposition of the components on the circuit board 80 can be increased. Furthermore, an increase in the length of the blowing device 1 in the axial direction can be suppressed.

As illustrated in Figs. 1 to 3, the circuit board 80 is disposed away from and below the motor housing 20. Tubular spacers 90 extending in the axial direction is disposed between the circuit board 80 and the motor housing 20 in the axial direction. With the above, the circuit board 80 is disposed so that there is a predetermined space between the circuit board 80 and the motor housing 20 in the axial direction. In the present embodiment, the number of spacers 90 is plural, specifically, three.

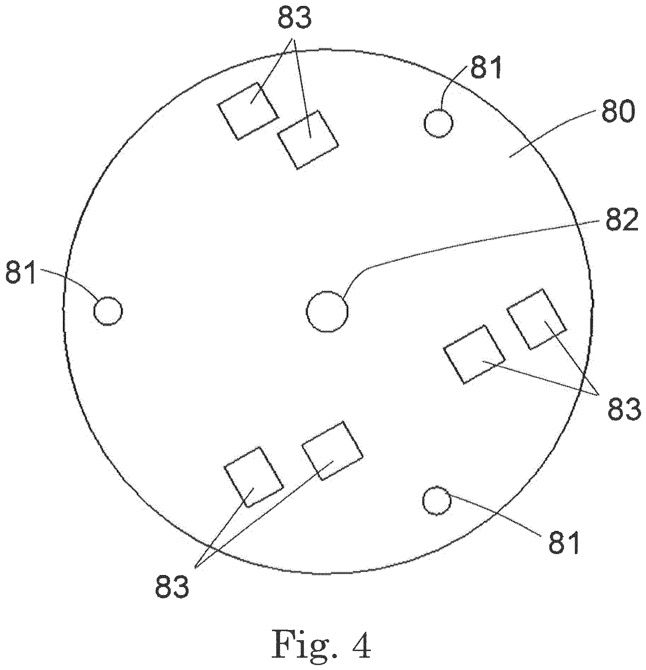

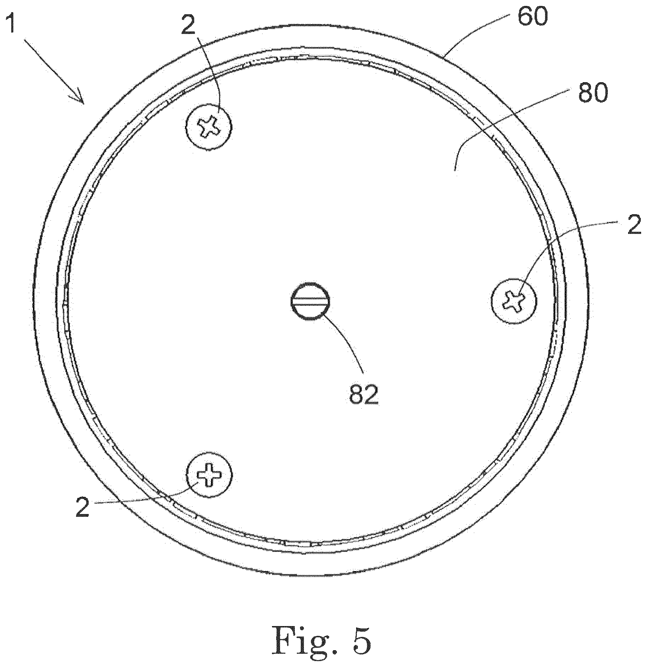

Fig. 4 is a schematic diagram of the upper surface of the circuit board 80 included in the blowing device 1 according to the embodiment exemplifying the present disclosure. Fig. 5 is a bottom view of the blowing device 1 according to the embodiment exemplifying the present disclosure. As illustrated in Figs. 4 and 5, the circuit board 80 of the present exemplary embodiment has a round shape. The plurality of spacers 90 are disposed on the outer side of the upper surface of the circuit board 80 in the radial direction. The plurality of spacers 90 are disposed equidistantly in the circumferential direction.

The circuit board 80 is in communication with the inside of each spacer 90 and includes fixing member holes 81 that penetrate through the circuit board 80 in the axial direction. In the present embodiment, three fixing member holes 81 are provided so as to correspond to the number of the spacers 90. The three fixing member holes 81 are disposed equidistantly in the circumferential direction. Portions of fixing members 2 are passed through the fixing member holes 81. In the present embodiment, the fixing members 2 are screws. However, the fixing members 2 may be members other than the screws such as a rivet. A portion of each screw 2 is passed through the inside of the corresponding fixing member hole 81 and the corresponding spacer 90 from under the circuit board 80. A tip of each screw 2 reaches the motor housing 20. With the above, the circuit board 80 is fixed to the motor housing 20 together with the spacers 90 with the screws 2. The fixing member holes 81 are closed by the fixing members 2. In other words, in the present exemplary embodiment, the fixing member holes 81 are not holes that pass air.

As illustrated in Figs. 3 to 5, the circuit board 80 includes circuit board through hole 82 that penetrates through the circuit board 80 in the axial direction at a portion inside the radially outer surface 20a of the motor housing 20 in the radial direction. The circuit board through hole 82 can pass air therethrough. In the present embodiment, the circuit board through hole 82 has a round shape in plan view in the axial direction. However, the circuit board through hole 82 may be elliptical or have a polygonal shape, for example. Furthermore, in the present embodiment, while the number of circuit board through holes 82 is one, the number of circuit board through holes 82 may be plural.

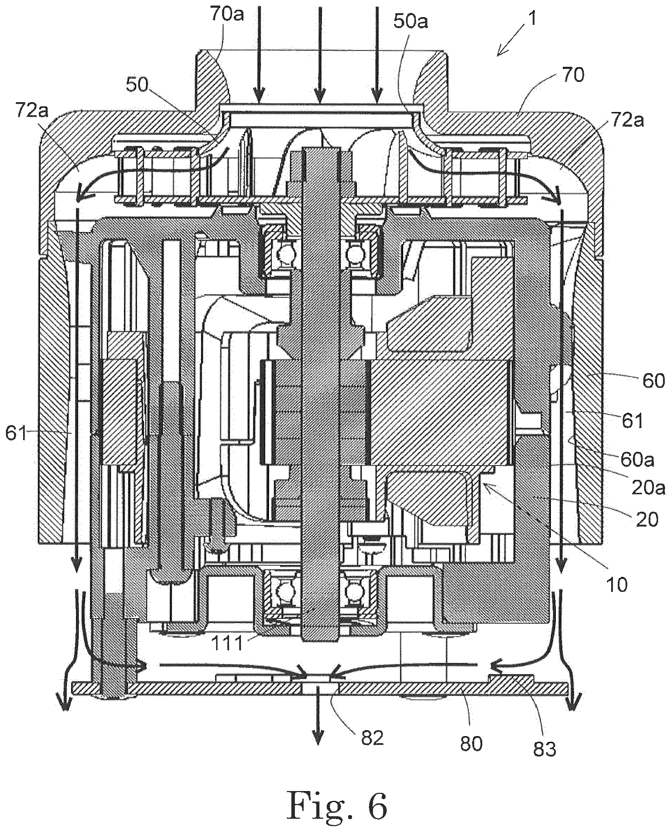

Fig. 6 is a diagram illustrating a flow of the air in the blowing device 1 according to the embodiment exemplifying the present disclosure. In Fig. 6, the air flows in the directions indicated by solid line arrows. As illustrated in Fig. 6, when the motor 10 is driven, the impeller 50 rotates together with the shaft 111, and the air is drawn in into the impeller cover 70 through the cover inlet port 70a.

The air that has been drawn in through the cover inlet port 70a is drawn into the impeller 50 through the impeller inlet port 50a. The impeller 50 passes the air, which has been drawn in through the impeller inlet port 50a, through the inner flow passages and discharges the air towards the outside in the radial direction. The air that has been discharged from the impeller 50 passes through the exhaust guide portion 72a and enters the flow passage 61 formed between the motor housing 20 and the blower case 60. The air that has entered the flow passage 61 exits the blower case 60 to the outside through a lower end opening of the blower case 60.

In the present exemplary embodiment, the circuit board through hole 82 is provided in the circuit board 80. Accordingly, a portion of the air that has flowed out downwardly through the flow passage 61 passes a space between the motor housing 20 and the circuit board 80 and is discharged to the outside of the blowing device 1 through the circuit board through hole 82. In other words, in the present exemplary embodiment, air can be distributed to the upper surface of the circuit board 80 regularly, and the circuit board 80 and the components on the circuit board 80 can be cooled efficiently.

As illustrated in Fig. 3, in the present embodiment, a radially outer end 80a of the circuit board 80 is positioned outside the radially outer surface 20a of the motor housing 20 in the radial direction. Due to the above, the air that has flowed out downwardly through the flow passage 61 can be easily made to impinge on the circuit board 80. In other words, with the present configuration, the air that has passed through the flow passage 61 and that has exited the blower case 60 to the outside can be easily guided to the upper surface of the circuit board 80, and the amount of air passing through the upper surface of the circuit board 80 and being discharged through the circuit board through hole 82 to a portion below the blowing device 1 can be increased. As a result, the efficiency in cooling the circuit board 80 and the components on the circuit board 80 can be improved.

As illustrated in Fig. 4, heat generating components 83 are disposed on the circuit board 80. In detail, the heat generating components 83 are disposed on the upper surface of the circuit board 80. The heat generating components 83 broadly includes components that generate heat by having electricity flow on the circuit board 80. However, the heat generating components 83 herein are desirably components that generate a large amount of heat such as, for example, a transistor, a shunt resistor, and an IC chip. In the example illustrated in Fig. 4, the heat generating components 83 are transistors. Among the electronic components disposed on the circuit board 80, the transistors 83 generate a large amount of heat. The present embodiment is capable of efficiently cooling the heat generating components 83 that generate a large amount of hear.

As illustrated in Fig. 4, the circuit board through hole 82 is, desirably, positioned inside the heat generating components 83 in the radial direction. While it is only sufficient that at least a portion of the circuit board through hole 82 is positioned inside the heat generating components 83 in the radial direction, it is desirable that the entire circuit board through hole 82 is positioned inside the heat generating components 83 in the radial direction. In the example illustrated in Fig. 4, the plurality of heat generating components 83 are disposed on the circuit board 80, and the circuit board through hole 82 is disposed inside all of the heat generating components 83 in the radial direction. According to the present configuration, the air that passes through the upper surface of the circuit board 80 and that flows into the circuit board through hole 82 can be easily made to directly impinge on the heat generating components 83; accordingly, the efficiency in cooling the heat generating components 83 can be improved.

For example, compared with a case in which the circuit board through hole 82 was not provided in the circuit board 80, the saturation temperature of the transistors 83 decreased by about 10°C from 130°C. The saturation temperature herein refers to a temperature that has become substantially constant after increase in the temperatures of the transistors 83.

Note that the circuit board through hole 82 may be, for example, disposed at a position that is the same as those of the heat generating components 83 in the radial direction or at a position outside the heat generating components 83 in the radial direction. With such a configuration, for example, the circuit board through hole 82 is, desirably, disposed near the heat generating components 83. Furthermore, for example, in a case in which the plurality of heat generating components 83 are disposed on the circuit board 80, as described above, the circuit board through hole 82 may be disposed inside all of the heat generating components 83 in the radial direction; however, the circuit board through hole 82 may be disposed inside some of the heat generating components 83 in the radial direction. Such a case as well is included in the configuration in which the circuit board through hole 82 is disposed inside the heat generating components 83. In the case in which the plurality of heat generating components 83 are disposed on the circuit board 80, desirably, the circuit board through hole 82 is disposed, in the radial direction, inside the heat generating component that generates the largest amount of heat. For example, among the heat generating components 83 mounted on the circuit board 80, when the transistor generates the largest amount of heat, the circuit board through hole 82 is, desirably, disposed inside the transistor in the radial direction.

In the present embodiment, in plan view in the axial direction, the circuit board through hole 82 is disposed at a position where the central axis C and the circuit board 80 overlap each other. In detail, the center of the circuit board through hole 82 and the center of the central axis C coincide each other. The present configuration is capable of uniformly distributing the air towards the circuit board through hole 82 in the circumferential direction. Furthermore, with the present configuration, even in a case in which plurality of heat generating components 83 are disposed on the circuit board 80, the circuit board through hole 82 can be disposed inside the plurality of heat generating components 83 in the radial direction. Furthermore, with the present configuration, even though the circuit board through hole 82 is provided in the circuit board 80, a decrease in the design freedom regarding the disposition of the components on the circuit board 80 can be prevented.

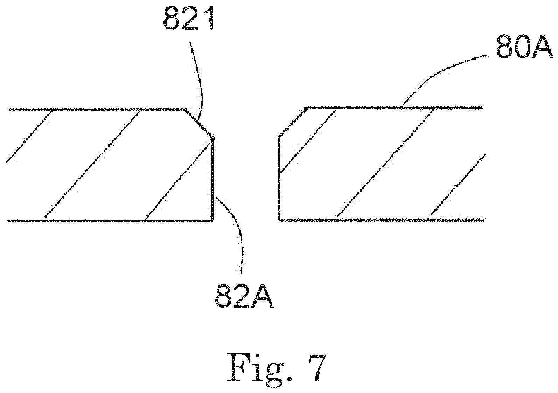

A first modification of the blowing device 1 of the present exemplary embodiment will be described. Fig. 7 is a diagram illustrating a circuit board through hole 82A of the first modification. As illustrated in Fig. 7, the circuit board through hole 82A is provided in a circuit board 80A. The circuit board through hole 82A has, at an upper portion thereof, a first inclined portion 821 that gradually increases the inside diameter of the through hole 82A from the lower side towards the upper side. By providing the first inclined portion 821, the diameter of the circuit board through hole 82A is the largest at the upper end in the axial direction.

In the present modification, the first inclined portion 821 is formed of a flat surface. However, the first inclined portion 821 may be a curved surface. In a case in which the first inclined portion 821 is a curved surface, the curved surface may be a protruded surface that protrudes upwards or may be a recessed surface recessed downwards.

According to the present modification, since the opening area of the upper portion of the circuit board through hole 82A is increased by the first inclined portion 821, the air flowing on the upper surface of the circuit board 80A can be guided more efficiently into the circuit board through hole 82A. Accordingly, the circuit board 80A and the components on the circuit board 80A can be cooled efficiently.

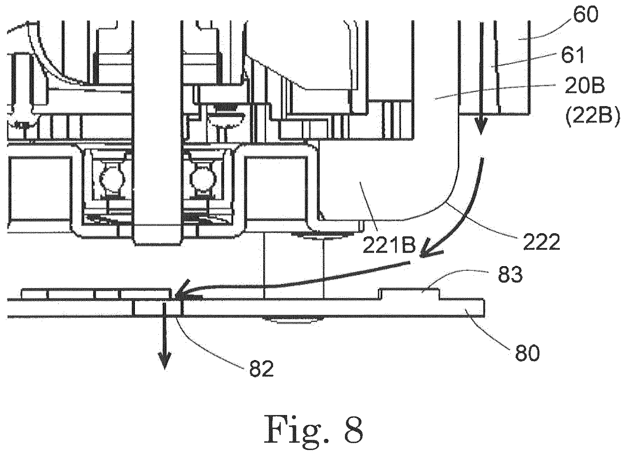

A second modification of the blowing device 1 of the present exemplary embodiment will be described. Fig. 8 is a diagram illustrating a motor housing 20B of the second modification. The circuit board 80 is also illustrated in Fig. 8. The solid line arrows in Fig. 8 indicate the flow of the air. As illustrated in Fig. 8, the motor housing 20B includes, at a radially outer end portion on the lower side thereof, a second inclined portion 222 in which a width of the housing 20B in the radial direction becomes gradually smaller from the upper side towards the lower side.

In the second modification as well, the motor housing 20B includes an upper housing (not shown) and a lower housing 22B. The lower housing 22B has a tubular shape. The lower housing 22B includes, at the lower end portion, an annular flange portion 221B that extends inwardly in the radial direction. An undersurface of the lower housing 22B opposes the upper surface of the circuit board 80 in the axial direction. The second inclined portion 222 is provided on the lower side of the lower housing 22B at the radially outer end portion. By providing the second inclined portion 222, the width of the lower housing 22B in the radial direction at the lower end in the axial direction is the smallest.

In the present modification, the second inclined portion 222 is formed of a curved surface. In detail, the second inclined portion 222 is a protruded surface that projects towards the lower side. However, the second inclined portion 222 may be a flat surface. Furthermore, in a case in which the second inclined portion 222 is a curved surface, the curved surface may be a recess that is recessed towards the upper side.

The air that has passed through the flow passage 61 between the motor housing 20B and the blower case 60 can be efficiently guided to the upper surface of the circuit board 80 with the second inclined portion 222 with the present modification. Accordingly, the amount of air passing through the upper surface of the circuit board 80 and downwards through the circuit board through hole 82 can be increased with the present modification. In other words, the circuit board 80 and the heat generating components 83 on the circuit board 80 can be efficiently cooled with the present modification.

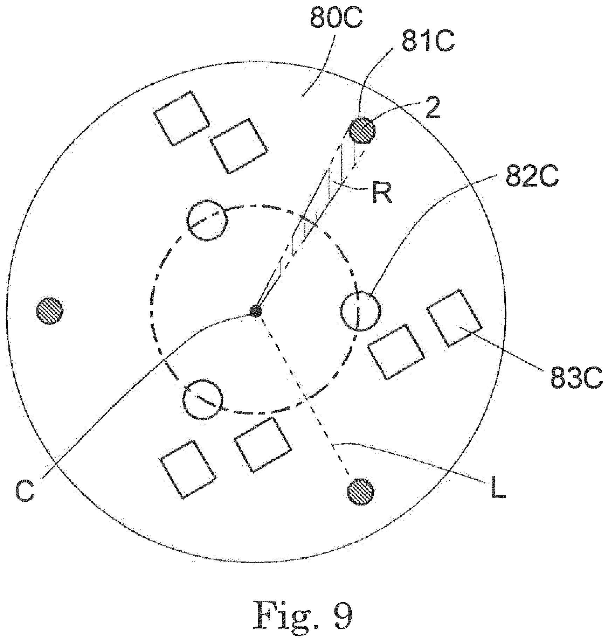

A third modification of the blowing device 1 of the present exemplary embodiment will be described. Fig. 9 is a diagram illustrating a circuit board 80C of the third modification. Similar to the present exemplary embodiment, the circuit board 80C is provided with fixing member holes 81C, and the fixing members 2 are inserted in the fixing member holes 81C. The circuit board 80C is fixed to the motor housing 20 with the fixing members 2. The fixing members 2 are screws, for example.

The circuit board 80C includes a plurality of circuit board through holes 82C. With the above configuration, the air that has passed through the flow passage 61 between the motor housing 20 and the blower case 60 can be made to flow along an upper surface of the circuit board 80C in a large quantity, and the circuit board 80C and heat generating components 83C on the circuit board 80C can be cooled efficiently. Note that in the present modification, while the number of circuit board through holes 82C is three, the number may be changed. Furthermore, in the present modification, while the circuit board through holes 82C each have a round shape in plan view in the axial direction, the shape thereof may be changed to another shape such as an elliptical shape or a polygonal shape.

In the present modification, the plurality of circuit board through holes 82C are disposed equidistantly in the circumferential direction. In the present modification, the three circuit board through holes 82C are disposed at intervals of 120° in the circumferential direction. The airflow distribution flowing on the circuit board 80C in the circumferential direction can be made uniform with the above.

In the present modification, the circuit board through holes 82C are, in plan view in the axial direction, disposed so as to be shifted in the circumferential direction with respect to the positions between the central axis C and the fixing members 2 in the radial direction. With the above configuration, the circuit board through holes 82C can be disposed at positions that are not easily affected by the fixing members 2 that interfere with the flow of air. In other words, the cooling efficiency can be improved with the present modification.

In detail, the fixing members 2 have widths in the circumferential direction. Accordingly, in plan view in the axial direction, the circuit board through holes 82C are, desirably, disposed at positions that are shifted in the circumferential direction with respect to regions R that are each defined between two lines that extend from the central axis C and that are tangent to the fixing member 2. However, the circuit board through holes 82C do not necessarily have to be disposed at positions shifted from the regions R in the circumferential direction. In other words, in plan view in the axial direction, it is only sufficient that the circuit board through holes 82C are disposed at positions shifted in the circumferential direction with respect to lines L that connect the central axis C and centers of the fixing members 2 to each other.

In the present modification as well serving as a preferable mode, at least a portion of each circuit board through hole 82C is positioned inside the heat generating component 83C in the radial direction. However, at least a portion of each circuit board through hole 82C may be positioned at a position that is the same as the heat generating components 83C in the radial direction or may be positioned outside the heat generating components 83C in the radial direction. Note that the heat generating components 83C described in the present modification are transistors.

An exemplary embodiment of the vacuum cleaner 100 to which the blowing device 1 of the present exemplary embodiment is applied will be described next. Fig. 10 is a perspective view of the vacuum cleaner 100 according to the embodiment exemplifying the present disclosure. As illustrated in Fig. 10, the vacuum cleaner 100 includes the blowing device 1. The vacuum cleaner 100 is a so-called electric stick vacuum cleaner. Note that the vacuum cleaner including the blowing device 1 may be another type of electric vacuum cleaner such as a so-called robot type, a canister type, or a handy type.

The vacuum cleaner 100 includes a casing 101 provided with an intake portion 102 and an exhaust portion 103 on an undersurface and an upper surface, respectively. The vacuum cleaner 100 includes a rechargeable battery (not shown), and is actuated by electric power supplied from the battery. However, the vacuum cleaner 100 may include a power supply cord, and may be actuated by electric power supplied from a power outlet provided in a wall of a living room and through the power supply cord connected to the power outlet.

An air passage (not shown) that connects intake portion 102 and the exhaust portion 103 tis formed in the casing 101. A dust collecting portion (not shown), a filter (not shown), and the blowing device 1 are disposed in the air passage sequentially in that order from the intake portion 102 (the upstream side) towards the exhaust portion 103 (the downstream side). The dust and the like included in the air flowing inside the air passage are collected by the filter and are collected in the dust collecting portion formed in a shape of a container. The dust collecting portion and the filter are detachable from the casing 101.

A holding portion 104 and an operation unit 105 are provided above the casing 101. The user can move the vacuum cleaner 100 by holding the holding portion 104. In the present embodiment, the operation unit 105 includes a plurality of buttons 105a. The user operates the buttons 105a to set the operation of the vacuum cleaner 100. For example, by operating the buttons 105a, commands such as starting the drive, stopping the drive, and changing the rotation speed of the blowing device 1 are issued. A rod-shaped suction tube 106 is connected to the intake portion 102. A suction nozzle 107 is attached to an upstream end of the suction tube 106 in a detachable manner with respect to the suction tube 106. Note that the upstream end of the suction tube 106 is the lower end of the suction tube 106 in Fig. 10.

In the vacuum cleaner 100 of the present exemplary embodiment, when the vacuum cleaner 100 is operated, the circuit board 80 and the components on the circuit board 80 included in the blowing device 1 can be cooled appropriately. In other words, the vacuum cleaner 100 that has an excellent circuit board 80 cooling characteristics can be provided with the present exemplary embodiment.

Various modifications can be made to the technical features disclosed in the present specification within the range of the scope of the creation of the technical ideas. Furthermore, the plurality of exemplary embodiments and the modifications described in the present specification can be combined within the possible range.

The present disclosure can be used in electrical machineries and apparatuses including a blowing device of a vacuum cleaner, for example.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure.

The scope of the present disclosure, therefore, is to be determined solely by the following claims.

## Claims

1. A blowing device (1) comprising:
an impeller (50) fixed to a shaft (111) disposed along a central axis (C) extending in an up-down direction, the impeller (50) being rotatable about the central axis (C);
a motor (10) configured to rotate the impeller (50);
a motor housing (20) disposed outside the motor (10) in a radial direction;
a blower case (60) disposed outside the motor housing (20) in the radial direction; and
a circuit board (80, 80A, 80C) disposed below a lower end of the motor housing (20),
wherein a flow passage (61) in communication with the impeller (50) is provided between a radially outer surface (20a) of the motor housing (20) and a radially inner surface (60a) of the blower case (60), and
wherein the circuit board (80, 80A, 80C) includes a circuit board through hole (82, 82A, 82C) that penetrates through the circuit board (80, 80A, 80C) in the axial direction at a portion inside the radially outer surface of the motor housing (20) in the radial direction.

2. The blowing device (1) according to Claim 1,
wherein a heat generating component (83, 83C) is disposed on the circuit board (80, 80A, 80C), and
wherein the circuit board through hole (82, 82A, 82C) is positioned inside the heat generating component (83, 83C) in the radial direction.

3. The blowing device (1) according to Claim 2, wherein the heat generating component (83, 83C) is a transistor.

4. The blowing device (1) according to any one of Claims 1 to 3,
wherein a radially outer end (80a) of the circuit board (80, 80A, 80C) is positioned outside the radially outer surface of the motor housing (20) in the radial direction.

5. The blowing device (1) according to any one of Claims 1 to 4,
wherein the circuit board through hole (82A) includes a first inclined portion (821) at an upper portion thereof, the first inclined portion (821) gradually increasing an inside diameter of the circuit board through hole (82A) from a lower side towards an upper side.

6. The blowing device (1) according to any one of Claims 1 to 5,
wherein the motor housing (20) includes a second inclined portion (222) at a radially outer end portion on a lower side thereof, the second inclined portion (222) gradually reducing a width of the motor housing (20) in the radial direction from an upper side towards a lower side.

7. The blowing device (1) according to any one of Claims 1 to 6,
wherein in plan view in the axial direction, the circuit board through hole (82, 82A) is disposed at a position where the central axis (C) and the circuit board (80, 80A) overlap each other.

8. The blowing device (1) according to any one of Claims 1 to 6,
wherein the circuit board (80, 80A, 80C) is fixed to the motor housing (20) with a fixing member (81), and
wherein in plan view in the axial direction, the circuit board through hole (82, 82A, 82C) is disposed so as to be shifted in a circumferential direction with respect to a position between the central axis (C) and the fixing member (81) in the radial direction.

9. The blowing device (1) according to any one of Claims 1 to 8,
wherein the circuit board (80C) includes a plurality of the circuit board through holes (82C).

10. The blowing device (1) according to Claim 9, wherein the plurality of circuit board through holes (82C) are disposed equidistantly in a circumferential direction.

11. The blowing device (1) according to any one of Claims 1 to 10,
wherein a lower end of the shaft (111) is disposed above the circuit board (80, 80A, 80C).

12. A vacuum cleaner (100) comprising:
the blowing device (1) according to any one of Claims 1 to 11.
